# EUROPÄISCHE PATENTSCHRIFT

(11) **EP 0 857 626 B1**
(45) Veröffentlichungstag und Bekanntmachung des Hinweises auf die Patenterteilung: **21.05.2003**
(21) Anmeldenummer: 98100824.6
(22) Anmeldetag: 19.01.1998
(51) Int. Cl.: B60R 21/26, B60R 21/20

(54) **Baugruppe aus einem Gasgenerator und einem Abströmrohr für ein Fahrzeuginsassen-Rückhaltesystem**
Gas generator and pipe assembly for a vehicle occupant restraint system
Ensemble composé d'un générateur de gaz et d'une canalisation pour un système de retenue d'un occupant de véhicule

(30) Priorität: 05.02.1997 DE 29702011 U
(43) Veröffentlichungstag der Anmeldung: 12.08.1998
(73) Patentinhaber: TRW Occupant Restraint Systems GmbH & Co. KG, 73551 Alfdorf (DE)
(72) Erfinder: Beisswenger, Roland, 73527 Schwäbisch Gmünd (DE); Öhlert, Franz, 73433 Aalen-Wasseralfingen (DE)
(74) Vertreter: Degwert, Hartmut, Dipl.-Phys.

(56) Entgegenhaltungen:
- EP-A- 0 369 579
- DE-U- 29 622 493
- US-A- 4 114 924
- US-A- 5 716 072

## Beschreibung

Die Erfindung betrifft eine Baugruppe aus einem Gasgenerator und einem mit diesem gasdicht verbundenen Abströmrohr für ein Fahrzeuginsassen-Rückhaltesystem. Ein solches Rückhaltesystem besteht üblicherweise aus einem Gasgenerator, einer Auslösesensorik für den Gasgenerator sowie einem Gassack, der mittels dem vom Gasgenerator im Bedarfsfall erzeugten Druckgas aus einem zusammengefalteten Zustand in einen entfalteten Zustand überführt wird, in welchem er eine Schutzwirkung für einen Fahrzeuginsassen bereitstellen kann.

Üblicherweise strömt das vom Gasgenerator erzeugte Gas direkt oder über Führungskanäle in einem Gehäuse, in welchem der Gasgenerator angeordnet ist, in den Gassack ein. Es sind jedoch seit kurzem auch Rückhaltesysteme bekannt, bei denen der Gasgenerator aus konstruktiven Gründen in einem gewissen Abstand vom Gassack angeordnet werden muß, weshalb das vom Gasgenerator erzeugte Gas zum Gassack geleitet werden muß. Ein Beispiel für ein solches Fahrzeuginsassen-Rückhaltesystem ist im deutschen Gebrauchsmuster 296 05 896 gegeben. Der Gasgenerator ist bei diesem System mittels eines Abströmrohres mit dem von ihm entfernt angeordneten Gassack verbunden.

Die Erfindung schafft eine besonders leicht zu verwirklichende Art der Anbindung des Abströmrohres an den Gasgenerator. Gattungsgemäß ist eine Baugruppe aus einem Gasgenerator und einem mit diesem gasdicht verbundenen Abströmrohr für ein Fahrzeuginsassen-Rückhaltesystem geschaffen, mit einem Ausstömabschnitt für das vom Gasgenerator im Bedarfsfall erzeugte Gas, der mit einer Arretiergestaltung versehen ist, und einer Eingriffsgestaltung an dem Abströmrohr. Erfindungsgemäß greift die Eingriffsgestaltung in die Arretiergestaltung formschlüssig einlegt und das Abströmrohr in zu diesem axialer Richtung am Gasgenerator fest, wobei die Arretiergestaltung durch eine Nut in Umfangsrichtung gebildet ist, die im Querschnitt ein Sägezahn-Profil mit einer zur Längsachse des Ausströmabschnittes senkrechten Flanke hat, die auf der dem Abströmrohr zugewandten Seite der Nut liegt, und wobei das Abströmrohr mittels eines plastisch verformten Abschnittes in die Nut eingreift. Durch die Verwendung einer Nut mit Sägezahn-Profil läßt sich eine zuverlässige Verbindung zwischen dem Gasgenerator und dem Abströmrohr schaffen, die sowohl einfach zu fertigen sowie schnell und automatisch montierbar ist. Weiterhin ist eine zuverlässige Abdichtung zwischen dem Gasgenerator und dem Abströmrohr gewährleistet. Als Abströmrohr kann entweder ein festes oder ein flexibles Abströmrohr gewählt werden.

Gemäß einer bevorzugten Ausführungsform der Erfindung ist vorgesehen, daß der in die Nut eingreifende Abschnitt des Abströmrohres durch Rollieren plastisch verformt ist. Rollieren oder Rollen ist ein Arbeitsvorgang, der mit besonders geringem Aufwand vorgenommen werden kann. Daher kann der Gasgenerator so lange wie möglich getrennt von allen anderen Komponenten gelagert und gehandhabt werden, was aus Sicherheitsgründen vorteilhaft ist. Erst unmittelbar zur Endmontage wird der Gasgenerator dann mit dem Abströmrohr verbunden.

Weitere Merkmale der Erfindung ergeben sich aus den Unteransprüchen.

Die Erfindung wird nachfolgend anhand von verschiedenen Ausführungsformen erläutert, die in den beigefügten Zeichnungen dargestellt sind. In diesen zeigen:
- Figur 1 in einer schematischen teilgeschnittenen Seitenansicht eine erfindungsgemäße Baugruppe gemäß einer ersten Ausführungsform der Erfindung;
- Figur 2 in einer schematischen Seitenansicht eine erfindungsgemäße Baugruppe gemäß einer zweiten Ausführungsform der Erfindung;
- Figur 3 in einer schematischen Seitenansicht einen Gasgenerator, der bei der Baugruppe von Figur 2 verwendet wird;
- Figur 4 in einem schematischen Querschnitt eine erste Variante der in Figur 2 dargestellten Baugruppe;
- Figur 5 in einem schematischen abgebrochenen Querschnitt eine zweite Variante der in Figur 2 dargestellten Baugruppe;
- Figur 6 schematisch eine Anwendung für eine erfindungsgemäße Baugruppe gemäß der ersten Ausführungsform; und
- Figur 7 schematisch eine Anwendung für eine erfindungsgemäße Baugruppe gemäß der zweiten Ausführungsform.

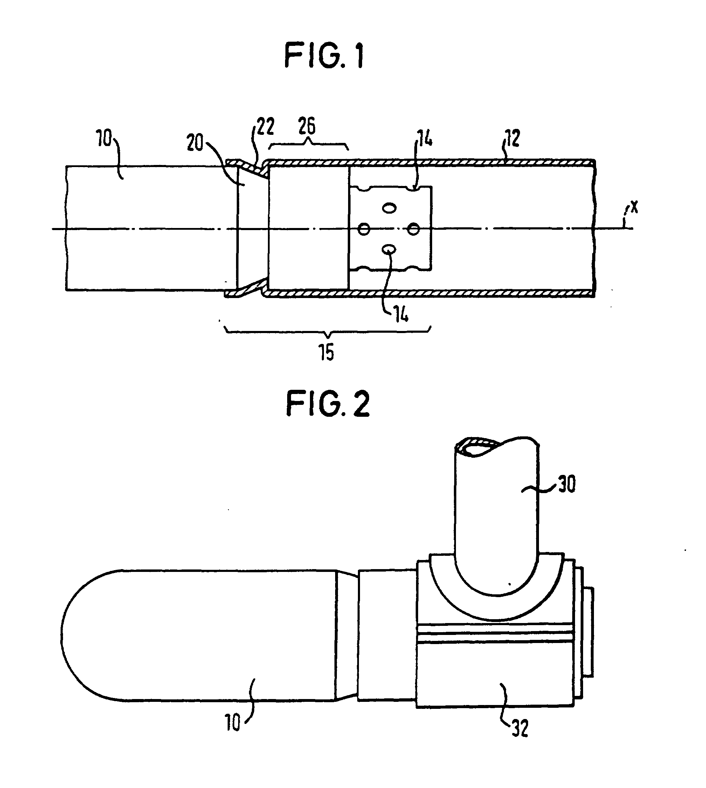

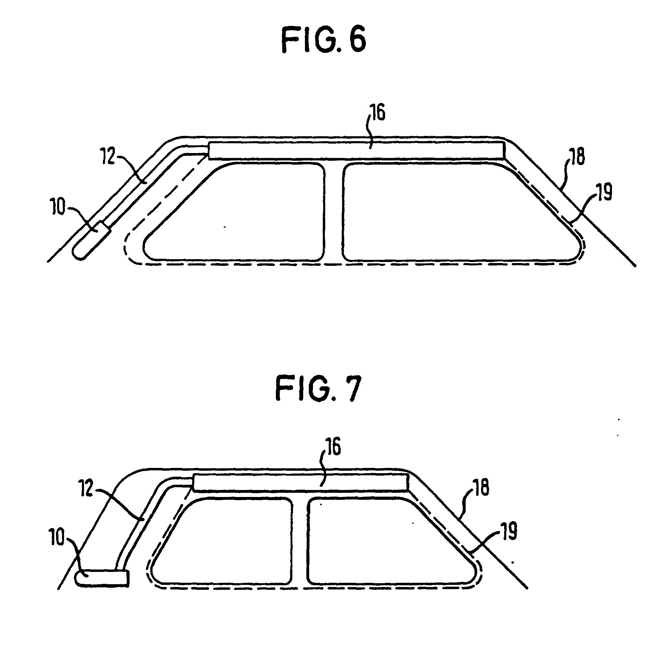

In Figur 1 ist schematisch eine erfindungsgemäße Baugruppe gemäß einer ersten Ausführungsform dargestellt. Die Baugruppe weist einen abgebrochen dargestellten Gasgenerator 10 sowie ein Abströmrohr 12 auf. Der Gasgenerator 10 ist allgemein rohrförmig und an seinem bezüglich Figur 1 rechten axialen Ende, dem sogenannten Ausströmabschnitt 15, mit Ausströmöffnungen 14 versehen. Das Abströmrohr 12 ist dafür vorgesehen, den Gasgenerator 10 mit einem in Figur 6 schematisch dargestellten Gassack 16 zu verbinden, der entlang einem Dachholm eines schematisch angedeuteten Fahrzeugs 18 angeordnet ist. Wenn der Gassack 16 entfaltet ist, deckt er die Seitenfenster eines Fahrzeugs ab, so daß die Fahrzeuginsassen bei einem Seitenaufprall geschützt sind. Die Kontur des entfalteten Gassacks ist mit dem Bezugszeichen 19 angedeutet.

Wie in Figur 1 weiter zu sehen ist, ist der Gasgenerator 10 im Bereich des Ausströmabschnittes 15 auf seinem Außenumfang mit einer Arretiergestaltung versehen. Die Arretiergestaltung ist als sägezahnartige Umfangsnut ausgebildet, deren zur Längsachse x des Gasgenerators senkrechte Flanke auf der den Ausströmöffnungen 14 zugewandten Seite der Nut 20 angeordnet ist.

Das Abströmrohr 12 ist an seinem bezüglich Figur 1 linken Ende mit einer Eingriffsgestaltung 22 versehen, die in die Nut 20 eingreift. Die Eingriffsgestaltung 22 als plastisch verformter Abschnitt des Abströmrohres 12 ausgeführt, dessen Profil an das Profil der Nut 20 angepaßt ist. Eine solche plastisch verformte Eingriffsgestaltung kann in besonders vorteilhafter Weise durch Rollieren des Abströmrohres 12 oder durch ein ähnliches Verfahren erhalten werden. Das Abströmrohr 12 wird also mittels der in die Nut 20 eingreifenden Eingriffsgestaltung 22 des Abströmrohres formschlüssig an dem Gasgenerator 10 festgelegt. Gleichzeitig bildet die in die Nut 20 eingreifende Eingriffsgestaltung 22 des Abströmrohres 12 eine Dichtung, so daß der Gasgenerator 10 gasdicht mit dem Abströmrohr 12 verbunden ist. Diese Dichtung wird in ihrer Wirkung unterstützt durch einen Führungsbereich 26, in welchem das Abströmrohr 12 eng am Außenumfang des Gasgenerators 10 anliegt. Dieser Führungsbereich 26 hat zusätzlich die Funktion einer Stabilisierung des Abströmrohres 12 bezüglich des Gasgenerators 10, so daß zwischen dem Abströmrohr 12 und dem Gasgenerator 10 wirkende Biegemomente weitestgehend von der Nut 20 und der in diese eingreifenden Eingriffsgestaltung 22 ferngehalten werden.

In Figur 2 ist eine zweite Ausführungsform der Erfindung dargestellt. Im Gegensatz zur ersten Ausführungsform, bei der sich das Abströmrohr 12 bezüglich des Gasgenerators 10 in axialer Richtung erstreckt, erstreckt sich bei der zweiten Ausführungsform das Abströmrohr 12 bezüglich des Gasgenerators 10 in radialer Richtung (siehe auch Figur 7).

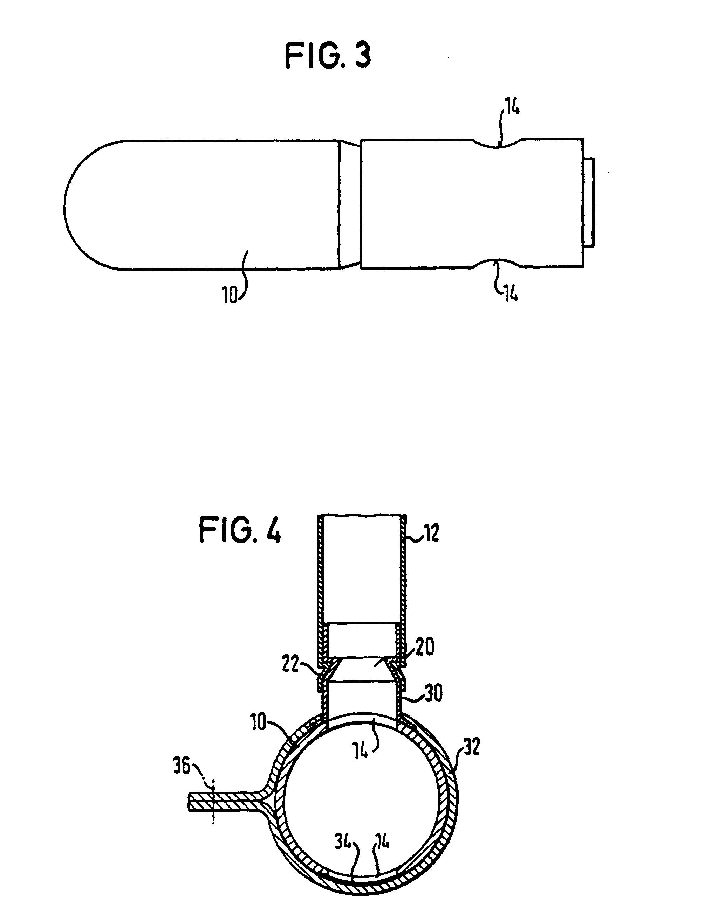

In Figur 3 ist ein Beispiel für einen Gasgenerator 10 dargestellt, der bei der zweiten Ausführungsform verwendet werden kann. Der Unterschied zu dem bei der ersten Ausführungsform verwendeten Gasgenerator besteht darin, daß die Ausströmöffnungen 14 nicht mehr an einem Absatz kleineren Durchmessers angeordnet sind, sondern direkt am Außenumfang des Gasgenerators. Gemäß der zweiten Ausführungsform ist vorgesehen, daß im Bereich der Ausströmöffnungen 14 des Gasgenerators 10 ein Stutzen 30 angeordnet ist, der den Ausströmabschnitt für das von Gasgenerator gelieferte Gas bildet. Dieser Stutzen ist mit dem Gasgenerator 10 mittels einer Schelle 32 verbunden.

In Figur 4 ist eine erste Variante der zweiten Ausführungsform der Erfindung dargestellt. Der Stutzen 30 ist auf der bezüglich Figur 4 obenliegenden Ausströmöffnung 14 angeordnet. Über der bezüglich Figur 4 untenliegenden Ausströmöffnung 14 ist eine Dichtleiste 34 angeordnet. Sowohl die Dichtleiste 34 als auch der Stutzen 30 werden mittels der Schelle 32 fest auf dem Außenumfang des Gasgenerators 10 fixiert. Diese Schelle kann beispielsweise mittels einer schematisch dargestellten Schraube 36 auf dem Außenumfang des Gasgenerators verspannt werden.

Bei Versuchen hat sich herausgestellt, daß das Verschließen eines Teils der Ausströmöffnungen 14 des Gasgenerators 10 nahezu ohne Auswirkung auf die Ausströmzeit des erzeugten Druckgases ist. Das durch die freibleibende Ausströmöffnung 14 ausströmende Gas strömt durch den Stutzen 30 hindurch direkt in das Abströmrohr 12 ein. Das Abströmrohr 12 ist an dem Stutzen 30 mittels einer Arretiergestaltung und einer Eingriffsgestaltung befestigt, wie sie aus Figur 1 bekannt sind.

Bei der in Figur 4 dargestellten Variante kann für den Stutzen 30 ein vergleichsweise weiches Material verwendet werden, das sich unter dem von der Schelle 32 ausgeübten Druck an den Außenumfang des Gasgenerators 10 anpaßt, so daß ohne Verwendung einer zusätzlichen Dichtung eine gasdichte Verbindung zwischen dem Stutzen 30 und dem Gasgenerator 10 erhalten wird. Gemäß einer nicht dargestellten Variante kann der Stutzen auch mit einem weichen Material beschichtet sein, so daß er sich an den Gasgenerator gasdicht anschmiegt.

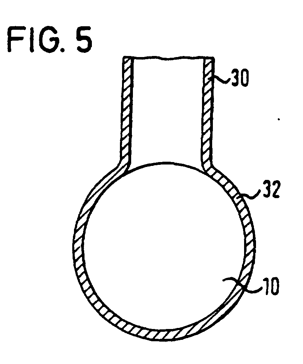

In Figur 5 ist eine zweite Variante der zweiten Ausführungsform der Erfindung dargestellt. Diese Variante unterscheidet sich von der in Figur 4 gezeigten ersten Variante dadurch, daß der Stutzen 30 und die Schelle 32 einstückig miteinander ausgeführt sind. Die Schelle ist bei der dargestellten Variante auf den Gasgenerator 10 aufgepreßt.

## Patentansprüche

1. Baugruppe aus einem Gasgenerator (10) und einem mit diesem gasdicht verbundenen Abströmrohr (12) für ein Fahrzeuginsassen-Rückhaltesystem, mit einem Ausstömabschnitt (15; 30) für das vom Gasgenerator (10) im Bedarfsfall erzeugte Gas, der mit einer Arretiergestaltung versehen ist, und einer Eingriffsgestaltung (22) an dem Abströmrohr (12) **dadurch gekennzeichnet, daß**, die Eingriffsgestaltung (22) in die Arretiergestaltung formschlüssig eingreift und das Abströmrohr (12) in zu diesem axialer Richtung am Gasgenerator (10) festlegt, wobei die Arretiergestaltung durch eine Nut (20) in Umfangsrichtung gebildet ist, die im Querschnitt ein Sägezahn-Profil mit einer zur Längsachse des Ausströmabschnittes (15; 30) senkrechten Flanke hat, die auf der dem Abströmrohr (12) zugewandten Seite der Nut (20) liegt, und wobei die Eingriffsgestaltung (22) aus einem plastisch verformten Abschnitt des Abströmrohrs (12) besteht, mittels dessen das Abströmrohr (12) in die Nut (20) eingreift.

2. Baugruppe nach Anspruch 1, **dadurch gekennzeichnet, daß** der in die Nut (20) eingreifende Abschnitt des Abströmrohres (12) durch Rollieren plastisch verformt ist.

3. Baugruppe nach einem der Ansprüche 1 und 2, **dadurch gekennzeichnet, daß** der Ausströmabschnitt durch ein axiales Ende (15) des rohrförmigen Gasgenerators (10) gebildet ist und die Arretiergestaltung auf dem Außenumfang des Gasgenerators (10) ausgebildet ist.

4. Baugruppe nach einem der Ansprüche 1 und 2, **dadurch gekennzeichnet, daß** der Ausströmabschnitt durch einen zylindrischen Stutzen (30) gebildet ist, der mit dem rohrförmigen Gasgenerator (10) verbunden ist, und daß die Arretiergestaltung auf dem Außenumfang des Stutzens (30) ausgebildet ist.

5. Baugruppe nach Anspruch 4, **dadurch gekennzeichnet, daß** sich der Stutzen (30) bezüglich der Längsachse des Gasgenerators (10) in radialer Richtung erstreckt und mittels einer Schelle (32) im Bereich der Ausströmöffnungen (14) des Gasgenerators (10) an diesem befestigt ist.

6. Baugruppe nach Anspruch 5, **dadurch gekennzeichnet, daß** die Schelle (32) einen Teil der Ausströmöffnungen (14) des Gasgenerators (10) abdeckt.

7. Baugruppe nach Anspruch 6, dadurch gekennzeichet, daß zwischen der Schelle (32) und den von dieser abgedeckten Ausströmöffnungen (14) des Gasgenerators (10) eine Dichtleiste (34) angeordnet ist.

8. Baugruppe nach einem der Ansprüche 5 und 6, **dadurch gekennzeichnet, daß** der Stutzen (30) aus einem relativ weichen Material besteht, so daß er sich aufgrund der von der Schelle (32) aufgebrachten Kräfte gasdicht an den Gasgenerator (10) anschmiegt.

9. Baugruppe nach einem der Ansprüche 5 und 6, **dadurch gekennzeichnet, daß** der Stutzen (30) mit einem relativ weichen Material beschichtet ist, so daß er sich aufgrund der von der Schelle (32) aufgebrachten Kräfte gasdicht an den Gasgenerator (10) anschmiegt.

10. Baugruppe nach Anspruch 4, **dadurch gekennzeichnet, daß** der Stutzen (30) einstückig mit dem Gasgenerator (10) ausgebildet ist.

11. Baugruppe nach Anspruch 4, **dadurch gekennzeichnet, daß** der Stutzen (30) mit einem schellenartigen Fortsatz (32) versehen ist, der auf den Gasgenerator (10) aufgesetzt ist.

## Claims

1. An assembly comprised of an inflator (10) and a gas exit tube (12) connected in a gas-tight manner thereto, for a vehicle occupant restraint system, having a discharge portion (15; 30) for the gas generated by the inflator (10) when required, the discharge portion being provided with an arresting means, and the gas exit tube (12) having an engaging means (22), **characterised in that** the engaging means (22) engages the arresting means with an interlocking fit and secures the gas exit tube (12) axially thereto at the inflator (10), the arresting means being formed by a circumferential groove (20) having in cross-section a saw tooth profile with a flank perpendicular to the longitudinal axis of the discharge portion (15; 30), the flank being located on the side of the groove (20) facing the gas exit tube (12), and the engaging means (22) consisting of a plastically deformed portion of the gas exit tube (12) by means of which the gas exit tube (12) engages the groove (20).

2. The assembly as set forth in claim 1, **characterised in that** the portion of the gas exit tube (12) engaging the groove (20) is plastically deformed by rolling.

3. The assembly as set forth in any one of claims 1 and 2, **characterised in that** the discharge portion is formed by an axial end (15) of the tubular inflator (10) and the arresting means is formed on the outer circumference of the inflator (10).

4. The assembly as set forth in any one of claims 1 and 2, **characterised in that** the discharge portion is formed by a cylindrical port (30) connected to the tubular inflator (10) and **in that** the arresting means is formed on the outer circumference of the port (30).

5. The assembly as set forth in claim 4, **characterised in that** the port (30) extends radially relative to the longitudinal axis of the inflator (10) and is secured to the inflator (10) by means of a clip (32) in the region of the outflow orifices (14) of the inflator (10).

6. The assembly as set forth in claim 5, **characterised in that** the clip (32) covers some of the outflow orifices (14) of the inflator (10).

7. The assembly as set forth in claim 6, **characterised in that** a sealing strip (34) is arranged between the clip (32) and the outflow orifices (14) of the inflator (10) covered by the clip (32).

8. The assembly as set forth in any one of claims 5 and 6, **characterised in that** the port (30) consists of a relatively soft material so that it forms a snug gastight fit with the inflator (10) due to the forces exerted by the clip (32).

9. The assembly as set forth in any one of claims 5 and 6, **characterised in that** the port (30) is coated with a relatively soft material so that it forms a snug gas-tight fit with the inflator (10) due to the forces exerted by the clip (32).

10. The assembly as set forth in claim 4, **characterised in that** the port (30) is formed integrally with the inflator (10).

11. The assembly as set forth in claim 4, **characterised in that** the port (30) is provided with a clip-like appendix (32) which is placed on the inflator (10).

## Revendications

1. Ensemble constitué par un générateur de gaz (10) et par un tube de sortie d'écoulement (12) relié à celui-ci de manière étanche au gaz pour un système de retenue d'occupants d'un véhicule, comportant un tronçon d'échappement (15 ; 30) pour le gaz engendré en cas de besoin par le générateur de gaz (10), le tronçon d'échappement étant pourvu d'un moyen de blocage, et le tube de sortie d'écoulement (12) comportant un moyen d'engagement (22), **caractérisé en ce que** le moyen d'engagement s'engage par coopération de formes dans le moyen de blocage et immobilise sur le générateur de gaz (10) le tube de sortie d'écoulement (12) en direction axiale de celui-ci, le moyen de blocage étant formé par une gorge (20) en direction périphérique qui a un profil en dents de scie en section transversale avec un flanc perpendiculaire à l'axe longitudinal du tronçon d'échappement (15 ; 30), le flanc étant situé sur le côté de la gorge (20) tourné vers le tube de sortie d'écoulement (12), et le moyen d'engagement (22) étant constitué par un tronçon du tube de sortie d'écoulement (12) déformé plastiquement, au moyen duquel le tube de sortie d'écoulement (12) s'engage dans la gorge (20).

2. Ensemble selon la revendication 1, **caractérisé en ce que** le tronçon du tube de sortie d'écoulement (12) qui s'engage dans la gorge (20) est déformé plastiquement par roulement.

3. Ensemble selon l'une des revendications 1 et 2, **caractérisé en ce que** le tronçon d'échappement est formé par une extrémité axiale (15) du générateur de gaz (10) de forme tubulaire, et **en ce que** le moyen de blocage est réalisé sur la périphérie extérieure du générateur de gaz (10).

4. Ensemble selon l'une des revendications 1 et 2, **caractérisé en ce que** le tronçon d'échappement est formé par une tubulure cylindrique (30) qui est reliée au générateur de gaz (10) de forme tubulaire, et **en ce que** le moyen de blocage est réalisé sur la périphérie extérieure de la tubulure (30).

5. Ensemble selon la revendication 4, **caractérisé en ce que** la tubulure (30) s'étend en direction radiale par rapport à l'axe longitudinal du générateur de gaz (10) et est fixée sur celui-ci au moyen d'un collier (32) dans la région des orifices d'échappement (14) du générateur de gaz (10).

6. Ensemble selon la revendication 5, **caractérisé en ce que** le collier (32) couvre une partie des orifices d'échappement (14) du générateur de gaz (10).

7. Ensemble selon la revendication 6, **caractérisé en ce qu'**une baguette d'étanchéité (34) est agencée entre le collier (32) et les orifices d'échappement (14) du générateur de gaz (10) couverts par le collier (32).

8. Ensemble selon l'une des revendications 5 et 6, **caractérisé en ce que** la tubulure (30) est constituée par un matériau relativement souple de sorte qu'elle vient épouser le générateur de gaz (10) de manière étanche au gaz en raison des forces appliquées par le collier (32).

9. Ensemble selon l'une des revendications 5 et 6, **caractérisé en ce que** la tubulure (30) est revêtue par un matériau relativement souple de sorte qu'elle vient épouser le générateur de gaz (10) de manière étanche au gaz en raison des forces appliquées par le collier (32).

10. Ensemble selon la revendication 4, **caractérisé en ce que** la tubulure (30) est réalisée d'une seule pièce avec le générateur de gaz (10).

11. Ensemble selon la revendication 4, **caractérisé en ce que** la tubulure (30) est pourvue d'un prolongement (32) en forme de collier qui est placé sur le générateur de gaz (10).
